# EUROPÄISCHE PATENTANMELDUNG

(11) **EP 1 815 966 A2**
(43) Veröffentlichungstag der Anmeldung: **08.08.2007**
(21) Anmeldenummer: 06024359.9
(22) Anmeldetag: 24.11.2006
(51) Int. Cl.: B29C 65/08

(54) **Ultraschall-Verbindungsvorrichtung und Verfahren zum Verbinden von Materialbahnen**

(30) Priorität: 07.02.2006 DE 102006005734
(71) Anmelder: BHS Corrugated Maschinen-und Anlagenbau GmbH, 92729 Weiherhammer (DE)
(72) Erfinder: Hielscher, Harald, Dr.-Ing., 14532 Stahnsdorf (DE); Lehmann, Norbert, Dipl.Ing., 15370 Petershagen (DE); Tissat, Volkmar, Dipl.-Ing., 14532 Stahnsdorf (DE)
(74) Vertreter: Rau, Albrecht

(57) **Zusammenfassung**

Bei einer Ultraschall-Verbindungsvorrichtung (1) und einem Verfahren zum Verbinden von Materialbahnen (2, 3) mittels Ultraschall ist zur Erzielung einer verbesserten Verbindung vorgesehen, dass mindestens eine Ultraschall-Sonotrode (5, 7) eine Hohlwalze (24) und ein mit der Hohlwalze (24) verbundenes Anrege-Element (23) aufweist, wobei das Anrege-Element (23) mit einer Ultraschall-Erzeugungs-Einrichtung (9) verbunden ist und Radial-Biegeschwingungen der Hohlwalze (24) anregt.

## Beschreibung

Die Erfindung betrifft eine Ultraschall-Verbindungsvorrichtung und ein Verfahren zum Verbinden von Materialbahnen, insbesondere von endlosen Papierbahnen zur Herstellung von Wellpappe.

Eine Vorrichtung der gattungsgemäßen Art ist aus der DE 103 43 325 A1 bekannt. Die bekannte Vorrichtung ist derart ausgebildet, dass eine rotierende Walze mittels einer Ultraschall-Erzeugungs-Einrichtung in axial zu der Walze verlaufende Längs-Schwingungen versetzt wird. Die Längs-Schwingungen bewirken Radial-Schwingungen an der rotierenden Walze, die wiederum an zu verbindenden Materialbahnen, die durch einen von der Walze und einer Gegendruckwalze gebildeten Spalt geführt werden, einen Schweißvorgang bewirken. Dadurch, dass die Länge der Walze einem ganzzahligen Vielfachen der halben Wellenlänge der Längs-Schwingungen entspricht, können gemäß der DE 103 43 325 A1 auch breite Materialbahnen bearbeitet werden.

Nachteilig bei der bekannten Vorrichtung ist, dass es sich bei den Radial-Schwingungen der Walze um Dickenschwingungen der Walze handelt. Die Dickenschwingungen werden aufgrund einer Radial-Kontraktion der Walze erzeugt und weisen die gleiche Wellenlänge wie die Längs-Schwingungen auf, wodurch lediglich eine begrenzte Amplitude erzeugbar ist. Die begrenzte Amplitude der Dickenschwingungen führt in bestimmten Anwendungsbereichen der Vorrichtung zu einer unzulänglichen Verbindung der Materialbahnen. Nachteilig ist ferner, dass die Längs-Schwingungen der Walze Reibungsverluste an den Materialbahnen verursachen.

Der Erfindung liegt die Aufgabe zugrunde, eine Ultraschall-Verbindungsvorrichtung und ein Verfahren zum Verbinden von Materialbahnen zu schaffen, die das Erzeugen von Radial-Schwingungen einer Hohlwalze mit hohen Amplituden bei gleichzeitiger Vermeidung von Längs-Schwingungen ermöglichen.

Diese Aufgabe wird erfindungsgemäß gelöst durch eine Ultraschall-Verbindungsvorrichtung und ein Verfahren mit den Merkmalen der Ansprüche 1 und 10. Der Kern der Erfindung besteht darin, dass die Hohlwalze der mindestens einen Ultraschall-Sonotrode derart ausgebildet ist, dass sie zur Ausführung von radial zu der Mittel-Längs-Achse wirkenden Radial-Biegeschwingungen anregbar ist. Zur Anregung der Radial-Biegeschwingungen ist mindestens ein mit der mindestens einen Ultraschall-Erzeugungs-Einrichtung und der Hohlwalze verbundenes Anrege-Element vorgesehen. Radial-Biegeschwingungen ermöglichen im Vergleich zum Stand der Technik das Erzeugen von höheren Amplituden bei gleichzeitiger Vermeidung von Längs-Schwingungen der Hohlwalze, wodurch der Schweißvorgang der zu verbindenden Materialbahnen verbessert und der Anwendungsbereich der Ultraschall-Verbindungsvorrichtung erweitert wird.

Weitere vorteilhafte Ausgestaltungen der Erfindung ergeben sich aus den Unteransprüchen.

Zusätzliche Merkmale und Einzelheiten der Erfindung ergeben sich aus der Beschreibung von mehreren Ausführungsbeispielen anhand der Zeichnung.

### Es zeigen:

- Fig. 1: eine perspektivische Ansicht einer Ultraschall-Verbindungsvorrichtung gemäß einem ersten Ausführungsbeispiel,
- Fig. 2: eine Seitenansicht der Ultraschall-Verbindungsvorrichtung gemäß Figur 1,
- Fig. 3: eine Draufsicht auf die Ultraschall-Verbindungsvorrichtung gemäß Figur 1,
- Fig. 4: einen schematischen Axialschnitt durch eine Ultraschall-Erzeugungs-Einrichtung und eine Ultraschall-Sonotrode der Ultraschall-Verbindungsvorrichtung gemäß Figur 1 mit angedeuteten Radial-Biegeschwingungen,
- Fig. 5: einen schematischen Axialschnitt durch eine Ultraschall-Erzeugungs-Einrichtung und eine Ultraschall-Sonotrode einer Ultraschall-Verbindungsvorrichtung gemäß einem zweiten Ausführungsbeispiel mit angedeuteten Radial-Biegeschwingungen, und
- Fig. 6: einen schematischen Axialschnitt durch eine Ultraschall-Erzeugungs-Einrichtung und eine Ultraschall-Sonotrode einer Ultraschall-Verbindungsvorrichtung gemäß einem dritten Ausführungsbeispiel mit angedeuteten Radial-Biegeschwingungen.

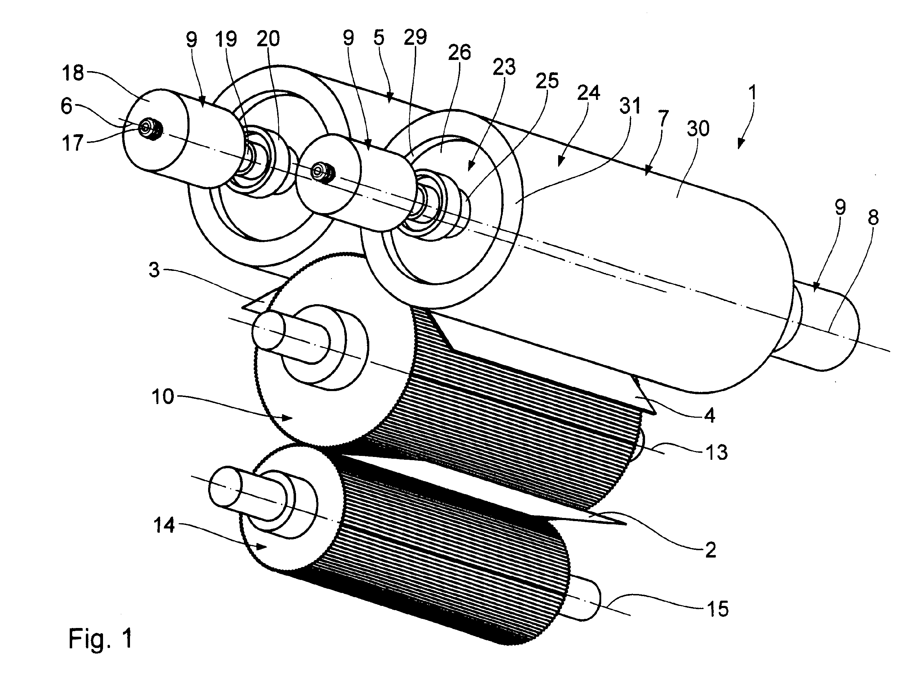

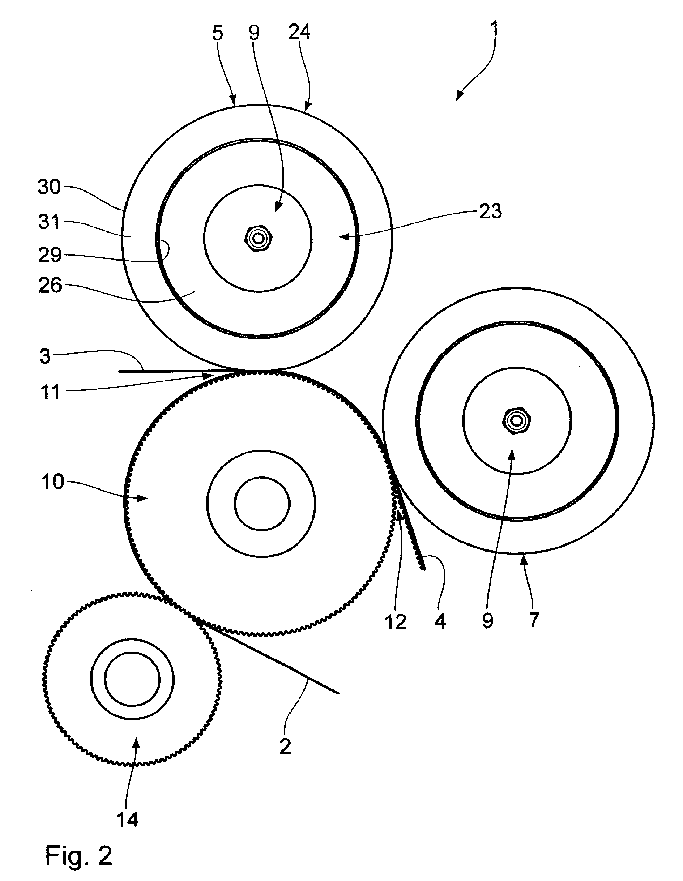

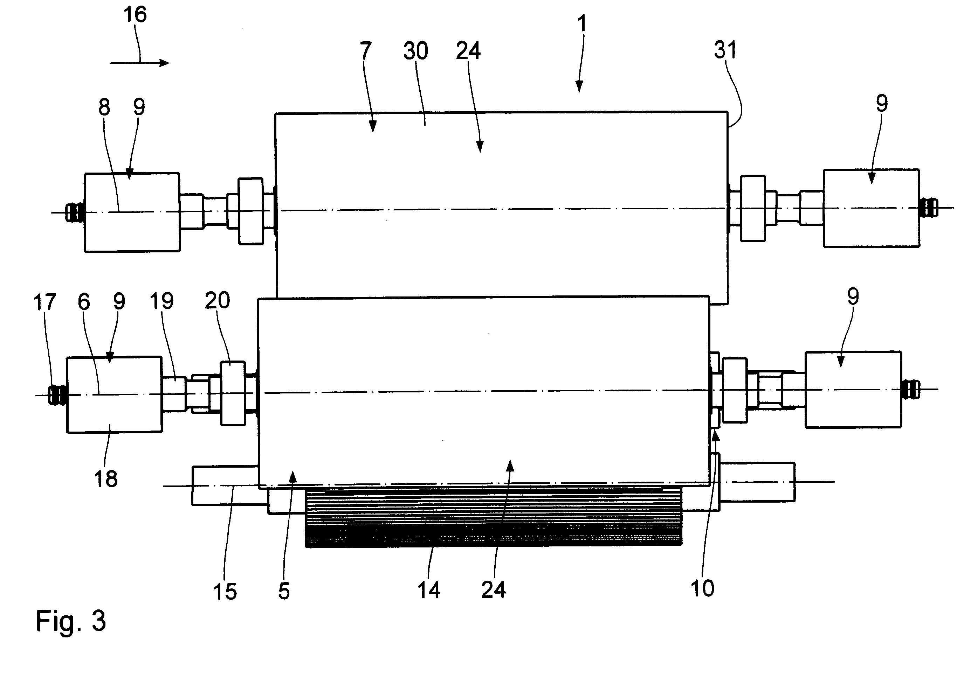

In den Figuren 1 bis 3 ist eine Ultraschall-Verbindungsvorrichtung 1 zum Verbinden von Materialbahnen dargestellt, die in einer nur teilweise gezeigten Wellpappe-Anlage angeordnet ist und zum Verbinden einer ersten endlosen Papierbahn 2 und einer zweiten endlosen Papierbahn 3 zu einer einseitig kaschierten Wellpappebahn 4 einsetzbar ist. Die Ultraschall-Verbindungsvorrichtung 1 weist eine erste Ultraschall-Sonotrode 5 mit einer ersten Mittel-Längs-Achse 6 und eine zweite Ultraschall-Sonotrode 7 mit einer zweiten Mittel-Längs-Achse 8 auf, wobei die Mittel-Längs-Achsen 6, 8 parallel zueinander verlaufen und die Ultraschall-Sonotroden 5, 7 beabstandet sowie entlang der Mittel-Längs-Achsen 6, 8 versetzt zueinander angeordnet sind. Die Ultraschall-Sonotroden 5, 7 sind jeweils mit zwei Ultraschall-Erzeugungs-Einrichtungen 9 verbunden, die relativ zu der jeweiligen Ultraschall-Sonotrode 5, 7 einander gegenüberliegen und konzentrisch zu der jeweiligen Mittel-Längs-Achse 6, 8 angeordnet sind. Die Ultraschall-Verbindungsvorrichtung 1 weist ferner ein Auflage-Bauteil 10 auf, das zum Hindurchführen der zu verbindenden Papierbahnen 2, 3 den Ultraschall-Sonotroden 5, 7 gegenüberliegt und mit diesen einen ersten Spalt 11 und einen zweiten Spalt 12 ausbildet. Das Auflage-Bauteil 10 ist als erste Riffelwalze einer Riffel-Einrichtung der Wellpappe-Anlage ausgebildet und um eine parallel zu den Mittel-Längs-Achsen 6, 8 verlaufende erste Riffelwalzen-Achse 13 drehantreibbar gelagert. Das Auflage-Bauteil wird im Folgenden als erste Riffelwalze 10 bezeichnet. Die erste Riffelwalze 10 wirkt zur Erzeugung von Wellen in der Papierbahn 2 in bekannter Weise mit einer zweiten Riffelwalze 14 zusammen, die um eine zweite Riffelwalzen-Achse 15 drehantreibbar gelagert und nicht Teil der Ultraschall-Verbindungsvorrichtung 1 ist. Die zweite Riffelwalzen-Achse 15 verläuft parallel zu der ersten Riffelwalzen-Achse 13.

Die Ultraschall-Erzeugungs-Einrichtungen 9 dienen zur Erzeugung von entlang einer jeweiligen Längs-Richtung 16 wirkenden, mechanischen Längs-Schwingungen im Ultraschall-Frequenzbereich. Die Ultraschall-Erzeugungs-Einrichtungen 9 sind identisch aufgebaut, sodass im Folgenden lediglich eine Ultraschall-Erzeugungs-Einrichtung 9 genau beschrieben ist.

Die Ultraschall-Erzeugungs-Einrichtung 9 weist einen nicht dargestellten Ultraschall-Generator, einen Ultraschall-Generator-Anschluss 17, einen Ultraschall-Wandler 18, einen Amplituden-Verstärker 19 und einen Lagersitz 20 auf. Der Ultraschall-Generator dient zur Erzeugung von elektrischen Schwingungen im Ultraschall-Frequenzbereich und ist mittels des Ultraschall-Generator-Anschlusses 17 elektrisch mit dem Ultraschall-Wandler 18 verbunden. Der Ultraschall-Wandler 18 ist konzentrisch zu der jeweiligen Mittel-Längs-Achse 6, 8 angeordnet und ist in bekannter Weise mit piezo-keramischen Werkstoffen zur Umwandlung der elektrischen Schwingungen in die mechanischen Längs-Schwingungen versehen.

Dem Ultraschall-Wandler 18 ist in Längs-Richtung 16 der Amplituden-Verstärker 19 nachgeordnet. Der Amplituden-Verstärker 19 ist ebenfalls konzentrisch zu der jeweiligen Mittel-Längs-Achse 6, 8 angeordnet und mittels Gewindestiften, beispielsweise aus Titan, mit dem Ultraschall-Wandler 18 verschraubt. Der Amplituden-Verstärker 19 ist in bekannter Weise zur gewünschten Verstärkung der Amplitude der Längs-Schwingungen ausgeführt. Die Längs-Richtung 16 ist parallel zu den Mittel-Längs-Achsen 6, 8.

Dem Amplituden-Verstärker 19 ist in Längs-Richtung 16 der Lagersitz 20 nachgeordnet. Der Lagersitz 20 ist konzentrisch zu der jeweiligen Mittel-Längs-Achse 6, 8 angeordnet und weist einen zylinderförmigen ersten Lager-Abschnitt 21 und einen entlang der Längs-Richtung 16 mittig und einteilig daran angeformten und sich radial zu der jeweiligen Mittel-Längs-Achse 6, 8 erstreckenden zweiten Lager-Abschnitt 22 auf. Der zweite Lager-Abschnitt 22 ist im Querschnitt T-förmig ausgebildet und liegt gegen ein nicht dargestelltes Widerlager an. Der Lagersitz 20 ist mittels Gewindestiften aus Titan fest mit dem Amplituden-Verstärker 19 verbunden.

Zwei Ultraschall-Erzeugungs-Einrichtungen 9 sind jeweils mit einer Ultraschall-Sonotrode 5, 7 verbunden. Die Ultraschall-Sonotroden 5, 7 weisen zur Umwandlung und Übertragung der Längs-Schwingungen der Ultraschall-Erzeugungs-Einrichtungen 9 auf die zu verbindenden Papierbahnen 2, 3 jeweils zwei Anrege-Elemente 23 und eine Hohlwalze 24 auf, wobei die Anrege-Elemente 23 mit der jeweils zugehörigen Ultraschall-Erzeugungs-Einrichtung 9 und der Hohlwalze 24 verbunden sind.

Die Anrege-Elemente 23 sind als Kreuzkoppler ausgebildet und konzentrisch zu der jeweiligen Mittel-Längs-Achse 6, 8 und teilweise innerhalb der zugehörigen Hohlwalze 24 angeordnet. Bei der nachfolgenden Beschreibung des ersten Ausführungsbeispiels werden die Anrege-Elemente als Kreuzkoppler 23 bezeichnet, wobei aufgrund des identischen Aufbaus lediglich ein Kreuzkoppler 23 genau beschrieben ist.

Der Kreuzkoppler 23 weist einen Zylinder-Abschnitt 25, einen in Längs-Richtung 16 mittig und einteilig an den Zylinder-Abschnitt 25 angeformten und sich radial zu der jeweiligen Mittel-Längs-Achse 6, 8 erstreckenden Scheiben-Abschnitt 26 sowie einen in Längs-Richtung 16 mittig und einteilig an den Scheiben-Abschnitt 26 angeformten und sich radial zu der jeweiligen Mittel-Längs-Achse 6, 8 erstreckenden Steg-Abschnitt 27 auf. Der Zylinder-Abschnitt 25 ist mittels Gewindestiften aus Titan fest mit dem ersten Lager-Abschnitt 21 verschraubt. Die Befestigung des Kreuzkopplers 23 mit der Hohlwalze 24 erfolgt beispielsweise mittels einer Presspassung, wobei der Steg-Abschnitt 27 flächig gegen die Hohlwalze 24 anliegt. Der Kreuzkoppler 23 ist derart ausgeführt, dass die von der Ultraschall-Erzeugungs-Einrichtung 9 aufgezwungenen Längs-Schwingungen in entlang einer Radial-Richtung 28 wirkende, mechanische Radial-Schwingungen umwandelbar sind, wobei die Radial-Richtung 28 senkrecht zu der Längs-Richtung 16 und der jeweiligen Mittel-Längs-Achse 6, 8 verläuft.

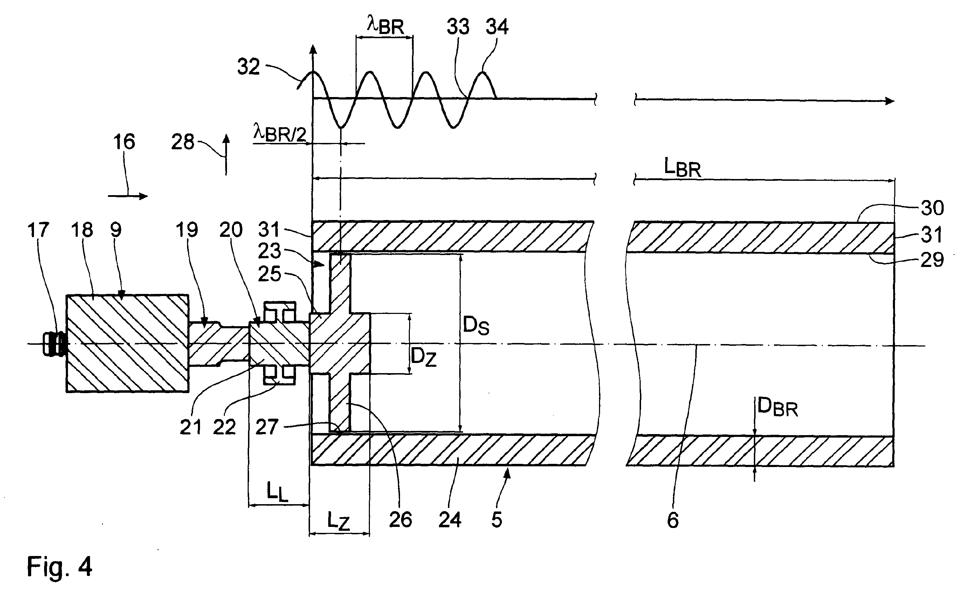

Die Hohlwalzen 24 der Ultraschall-Sonotroden 5, 7 sind identisch ausgebildet, sodass nachfolgend lediglich eine Hohlwalze 24 genau beschrieben ist. Die Hohlwalze 24 ist konzentrisch zu der jeweiligen Mittel-Längs-Achse 6, 8 angeordnet und mittels der beidseitig von dieser angeordneten Lagersitze 20 drehbar um die jeweilige Mittel-Längs-Achse 6, 8 gelagert. Die Hohlwalze 24 weist eine gegen die Steg-Abschnitte 27 der Kreuzkoppler 23 anliegende Innenwand 29, eine der Innenwand 29 gegenüberliegende und zu dieser parallel verlaufende Außenwand 30 sowie quer zu diesen verlaufende Stirnwände 31 auf. Die Hohlwalze 24 ist derart ausgebildet, dass sie mittels der Radial-Schwingungen der Kreuzkoppler 23 zur Ausführung von entlang der Radial-Richtung 28 wirkenden Radial-Biegeschwingungen 32 anregbar ist. Die Radial-Biegeschwingungen 32 sind in Figur 4 über der Hohlwalze 24 aufgetragen.

Die Hohlwalze 24 weist eine Länge L_{BR} und eine Dicke D_{BR} auf. Die Dicke D_{BR} der Hohlwalze 24 ist derart gewählt, dass die Hohlwalze 24 einerseits Radial-Biegeschwingungen 32 mit der gewünschten Amplitude ausführen und andererseits die mechanischen Belastungen aufgrund der Radial-Biegeschwingungen 32 aufnehmen kann. Die Dicke D_{BR} der Hohlwalze 24 beträgt zwischen 5 mm und 50 mm, insbesondere zwischen 10 mm und 25 mm, und insbesondere zwischen 15 mm und 20 mm. Der Außendurchmesser der Hohlwalze 24 beträgt abhängig von der Dicke D_{BR} zwischen 50 mm und 800 mm, insbesondere zwischen 100 mm und 400 mm, und insbesondere ungefähr 300 mm. Zur Anregung von als stehender Welle ausgebildeten Radial-Biegeschwingungen 32, die eine Biegeschwingungs-Resonanzwellenlänge von λ_{BR} aufweisen, ist die Länge L_{BR} derart gewählt, dass diese ein ganzzahliges Vielfaches n der halben Biegeschwingungs-Resonanzwellenlänge λ_{BR} ist. Zur Ausbildung einer stehenden Welle muss somit die Bedingung L_{BR} = n **•** λ_{BR}/2 mit n = 1, 2, 3, ... erfüllt sein.

Die als stehende Welle ausgebildeten Radial-Biegeschwingungen 32 weisen Schwingungsknoten 33 und Schwingungsmaxima 34 auf. Zur optimalen Anregung der Radial-Biegeschwingungen 32 der Hohlwalze 24 liegen die Kreuzkoppler 23 jeweils mit dem Steg-Abschnitt 27 im Bereich eines Schwingungsmaximums 34 der Radial-Biegeschwingungen 32 gegen die Hohlwalze 24 an.

Zur Umwandlung der Längs-Schwingungen in Radial-Schwingungen weist der Kreuzkoppler 23 ein Material und einen Aufbau derart auf, dass die Resonanzfrequenzen des Kreuzkopplers 23 in Längs-Richtung 16 und in Radial-Richtung 28 übereinstimmen. Der Zylinder-Abschnitt 25 des Kreuzkopplers 23 weist eine Länge L_{Z} und einen Durchmesser D_{Z} auf. Der Scheiben-Abschnitt 26 weist einen Durchmesser D_{S} auf, wobei der Durchmesser D_{S} gleich dreimal dem Durchmesser D_{Z} ist. Allgemein gilt, dass der Durchmesser D_{S} so gewählt wird, dass D_{S} = k • λ_{S} mit k = 1, 2, 3, ... ist, wobei λ_{S} die Wellenlänge der Radial-Schwingungen ist.

Die Ultraschall-Erzeugungs-Einrichtung 9 ist derart ausgebildet, dass als stehende Welle ausgebildete Längs-Schwingungen mit einer Längs-Schwingungs-Resonanzwellenlänge λ_{L} erzeugbar sind, wobei der zweite Lager-Abschnitt 22 des Lagersitzes 20 im Bereich eines Längs-Schwingungsknotens angeordnet ist. Die Länge L_{L} des Lagersitzes 20 entspricht der halben Längs-Schwingungs-Resonanzwellenlänge λ_{L,} sodass der Lagersitz 20 im Bereich eines Längs-Schwingungsmaximums gegen den Kreuzkoppler 23 anliegt. Alternativ kann die Länge L_{L} des Lagersitzes 20 auch ein ganzzahliges Vielfaches der halben Längs-Schwingungs-Resonanzwellenlänge λ_{L} sein.

Die Ultraschall-Erzeugungs-Einrichtungen 9 und die zugehörigen Ultraschall-Sonotroden 5, 7 müssen zur Ausbildung der Radial-Biegeschwingungen 32 gleiche Resonanzfrequenzen aufweisen. Dies gilt sowohl in der jeweiligen Längs-Richtung 16 als auch in der jeweiligen Radial-Richtung 28.

Nachfolgend wird die Funktionsweise der Ultraschall-Verbindungsvorrichtung 1 beschrieben. Die Ultraschall-Generatoren der Ultraschall-Erzeugungs-Einrichtungen 9 erzeugen elektrische Schwingungen mit einer Frequenz im Ultraschall-Frequenzbereich. Die elektrischen Schwingungen werden über die Ultraschall-Generator-Anschlüsse 17 auf die Ultraschall-Wandler 18 übertragen, wobei die Ultraschall-Wandler 18 die elektrischen Schwingungen in mechanische Längs-Schwingungen wandeln. Die mechanischen Längs-Schwingungen bilden entlang der jeweiligen Mittel-Längs-Achse 6, 8 eine stehende Welle aus, die in Abhängigkeit von der Konstruktion und dem Material der Ultraschall-Verbindungsvorrichtung 1 die Längs-Schwingungs-Resonanzwellenlänge λ_{L} aufweist. Die Amplitude der Längs-Schwingungen ist mittels den Amplituden-Verstärkern 19 einstellbar. Dadurch, dass die Länge L_{L} der Lagersitze 20 ein ganzzahliges Vielfaches der halben Längs-Schwingungs-Resonanzwellenlänge λ_{L} beträgt, sind die zweiten Lager-Abschnitte 22 im Bereich von Längs-Schwingungsknoten angeordnet, sodass deren mechanische Belastung minimiert ist. Aufgrund der mittigen Anordnung der zweiten Lager-Abschnitte 22 relativ zu den ersten Lager-Abschnitten 21 weisen die Längs-Schwingungen in den Bereichen, in denen die Lagersitze 20 gegen die Kreuzkoppler 23 anliegen, jeweils ein Längs-Schwingungsmaximum auf.

Die Ultraschall-Erzeugungs-Einrichtungen 9 arbeiten mit einer UltraschallFrequenz im Bereich von 16 kHz bis 50 kHz, insbesondere im Bereich von 18 kHz bis 20 kHz, und insbesondere von ungefähr 20 kHz und mit einer auf die Länge L_{BR} der zugehörigen Hohlwalze 24 bezogenen Ultraschallleistung im Bereich von 0,5 kW/m bis 16 kW/m, insbesondere im Bereich von 2 kW/m bis 8 kW/m, und insbesondere von ungefähr 5 kW/m. Die Amplitude der Längs-Schwingungen beträgt zwischen 2 µm und 50 µm, insbesondere zwischen 20 µm und 40 µm, und insbesondere ungefähr 35 µm.

Die mit den Längs-Schwingungen angeregten Zylinder-Abschnitte 25 der Kreuzkoppler 23 führen entlang der jeweiligen Längs-Richtung 16 Extraktionen und Kontraktionen durch. Mittig in den Zylinder-Abschnitten 25 ergeben sich aufgrund der auf die Längs-Schwingungen abgestimmten Längen L_{Z} Radial-Schwingungen in Form von Dickenschwingungen, die in Radial-Richtung 28 wirken. Die Radial-Schwingungen bilden in den Scheiben-Abschnitten 26 aufgrund der abgestimmten Durchmesser D_{Z} und D_{S} eine stehende Welle aus, wobei im Bereich der Steg-Abschnitte 27 jeweils ein Radial-Schwingungsmaximum liegt. Die Extraktionen und Kontraktionen der Zylinder-Abschnitte 25 werden somit über die Scheiben-Abschnitte 26 und die Steg-Abschnitte 27 auf die Hohlwalzen 24 übertragen.

Die auf die Hohlwalzen 24 übertragenen Radial-Schwingungen regen diese zu Radial-Biegeschwingungen 32 an. An den Schwingungsmaximas 34 werden die Hohlwalzen 24 wechselseitig in und entgegen die Radial-Richtung 28 gebogen, wobei im Bereich der halben Dicke D_{BR} der Hohlwalzen 24 eine spannungsfreie neutrale Zone verläuft. Aufgrund der auf die Biegeschwingungs-Resonanzwellenlänge λ_{BR} abgestimmten Länge L_{BR} der Hohlwalzen 24, bilden sich die Radial-Biegeschwingungen 32 als stehende Welle aus. Die Biegeschwingungs-Resonanzwellenlänge λ_{BR} unterscheidet sich in Abhängigkeit von dem Aufbau und dem Matetrial der Ultraschall-Sonotroden 5, 7 von der Längs-Schwingungs-Resonanzwellenlänge λ_{L}.

Zum Verbinden der Papierbahnen 2, 3 zu einer einseitig kaschierten Wellpappebahn 4 wird die erste Papierbahn 2 zunächst zwischen den Riffelwalzen 10, 14 gewellt und anschließend in Richtung des Spalts 11 bewegt. Die zweite Papierbahn 3 wird ebenfalls in Richtung des Spalts 11 bewegt, wobei die Papierbahnen 2, 3 im Spalt 11 gegeneinander anliegen. Die Radial-Biegeschwingungen 32 der ersten Ultraschall-Sonotrode 5 werden im Spalt 11 auf die Papierbahnen 2, 3 übertragen, wobei die Riffelwalze 10 beim Hindurchführen der Papierbahnen 2, 3 durch den Spalt 11 als Auflage-Bauteil dient. Die Radial-Biegeschwingungen 32 bewirken einen Schweißvorgang zwischen den Papierbahnen 2, 3, sodass diese miteinander verbunden werden. Die Festigkeit der Verbindung ist abhängig von der Amplitude der Radial-Biegeschwingungen 32. Im Bereich der Schwingungsknoten 33 der Radial-Biegeschwingungen 32 der ersten Ultraschall-Sonotrode 5 findet somit kein Verbinden statt, sodass entlang der Papierbahnen 2, 3 linienförmige Bereiche entstehen, die nicht miteinander verbunden sind.

Die teilweise miteinander verbundenen Papierbahnen 2, 3 werden in Richtung des zweiten Spalts 12 bewegt, wobei die Radial-Biegeschwingungen 32 einen weiteren Schweißvorgang zwischen den Papierbahnen 2, 3 bewirken. Dadurch, dass die zweite Ultraschall-Sonotrode 7 entlang der Mittel-Längs-Achse 8 versetzt zu der ersten Ultraschall-Sonotrode 5 angeordnet ist, werden während des Schweißvorgangs auch die bislang unverbundenen, linienförmigen Bereiche miteinander verbunden. Die zweite Ultraschall-Sonotrode 7 ist vorzugsweise um ein Viertel der Biegeschwingungs-Resonanzwellenlänge λ_{BR} zu der ersten Ultraschall-Sonotrode 5 versetzt angeordnet, sodass die unverbundenen, linienförmigen Bereiche im Bereich eines Schwingungsmaximums 34 der Radial-Biegeschwingungen 32 der zweiten Ultraschall-Sonotrode 7 liegen.

Durch die Erzeugung von Radial-Biegeschwingungen 32 sind im Vergleich zum Stand der Technik größere Amplituden realisierbar, sodass das Verbinden von Papierbahnen 2, 3 verbessert wird. Gleichzeitig erlaubt der Aufbau der Ultraschall-Sonotroden 5, 7 die Realisierung von Hohlwalzen 24 mit einem größeren Walzendurchmesser, was insbesondere bei der Herstellung von Wellpappe vorteilhaft ist.

Alternativ können die Ultraschall-Sonotroden 5, 7 jeweils nur mit einer Ultraschall-Erzeugungs-Einrichtung 9 versehen sein, wobei zur rotierbaren Lagerung der Ultraschall-Sonotroden 5, 7 anstelle der Ultraschall-Erzeugungs-Einrichtung 9 jeweils ein Kreuzkoppler 23 und ein Lagersitz 20 vorgesehen ist.

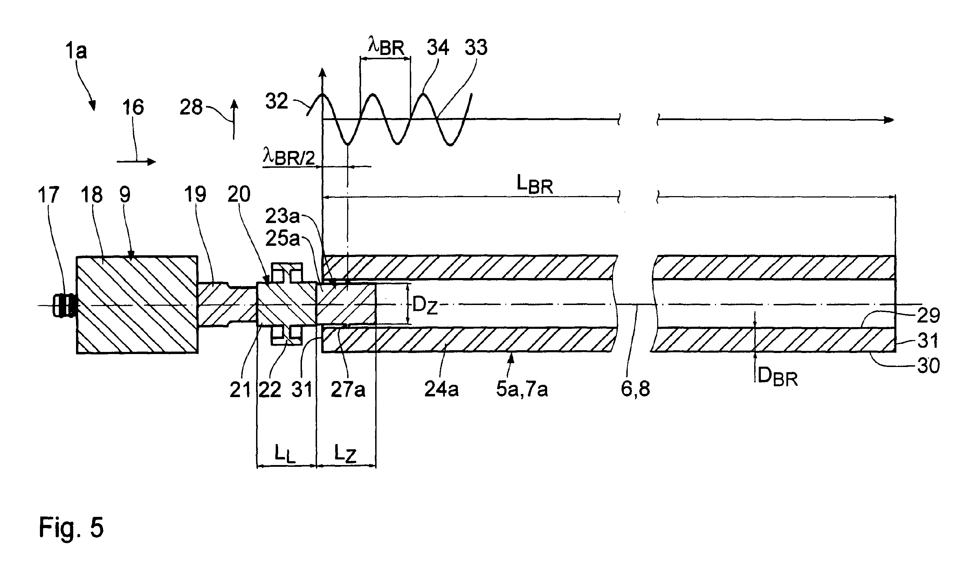

Nachfolgend wird unter Bezugnahme auf Figur 5 ein zweites Ausführungsbeispiel der Erfindung beschrieben. Konstruktiv identische Teile erhalten dieselben Bezugszeichen, wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der wesentliche Unterschied gegenüber dem ersten Ausführungsbeispiel besteht darin, dass die Steg-Abschnitte 27a der Anrege-Elemente 23a unmittelbar an die Zylinder-Abschnitte 25a einteilig und mittig angeformt sind. Die Anrege-Elemente 23a der Ultraschall-Sonotroden 5a, 7a weisen somit keine Scheiben-Abschnitte auf. Das zweite Ausführungsbeispiel stellt einen Spezialfall des ersten Ausführungsbeispiels dar, wobei der Durchmesser D_{S} der Scheiben-Abschnitte gleich dem Durchmesser D_{Z} der Zylinder-Abschnitte 25a ist. Die Radial-Schwingungen der Anrege-Elemente 23a stellen Dickenschwingungen dar, die mittels der Steg-Abschnitte 27a unmittelbar auf die Hohlwalzen 24a übertragen werden. Hinsichtlich der Funktionsweise des zweiten Ausführungsbeispiels wird auf die Ausführungen zum ersten Ausführungsbeispiel verwiesen.

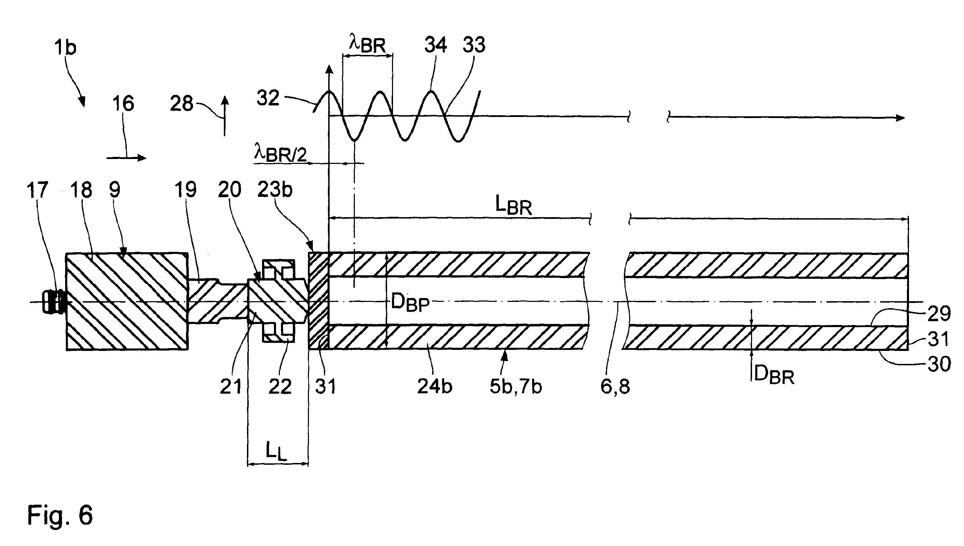

Nachfolgend wird unter Bezugnahme auf Figur 6 ein drittes Ausführungsbeispiel der Erfindung beschrieben. Konstruktiv identische Teile erhalten dieselben Bezugszeichen, wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b. Der wesentliche Unterschied gegenüber dem ersten Ausführungsbeispiel besteht darin, dass die Anrege-Elemente 23b als konzentrisch zu der jeweiligen Mittel-Längs-Achse 6, 8 angeordnete und gegen die Stirnwände 31 der Hohlwalzen 24 anliegende Biegeplatten ausgebildet sind. Bei der nachfolgenden Beschreibung des dritten Ausführungsbeispiels werden die Anrege-Elemente als Biegeplatten 23b bezeichnet.

Die Biegeplatten 23b sind scheibenförmig ausgebildet und weisen einen dem Durchmesser der Hohlwalzen 24b entsprechenden Durchmesser D_{BP} auf. Die Biegeplatten 23b sind stirnseitig mit den Hohlwalzen 24b verschweißt oder verschraubt. Die Lagersitze 20 sind ebenfalls mit den Biegeplatten 23b verschraubt.

Die Biegeplatten 23b sind derart ausgebildet, dass sie zur Ausführung von entlang der jeweiligen Längs-Richtung 16 wirkenden Längs-Biegeschwingungen anregbar sind. Die Ultraschall-Erzeugungs-Einrichtungen 9 und die Biegeplatten 23b sowie die Hohlwalzen 24b weisen gleiche Resonanzfrequenzen auf, sodass sich entsprechend den vorangegangenen Ausführungsbeispielen Radial-Biegeschwingungen 32 der Hohlwalzen 24b ausbilden. Zur Anregung der Radial-Biegeschwingungen 32 weisen die Biegeplatten 23b einen Durchmesser D_{BP} derart auf, dass sich die Längs-Biegeschwingungen der Biegeplatten 23b als stehende Welle mit einer Biegeplatten-Resonanzwellenlänge λ_{BP} ausbilden. Der Durchmesser D_{BP} der Biegeplatten 23b entspricht einem ganzen Vielfachen der Biegeplatten-Resonanzwellenlänge λ_{BP}.

Die Biegeplatten 23b führen aufgrund der Anregung mittels der Längs-Schwingungen Längs-Biegeschwingungen aus, wobei die Längs-Biegeschwingungen im Bereich der Stirnwände 31 jeweils ein Längs-Biegeschwingungsmaximum aufweisen. Die Längs-Biegeschwingungen der Biegeplatten 23b regen aufgrund des Anliegens der Biegeplatten 23b gegen die Stirnwände 31 Radial-Biegeschwingungen 32 der Hohlwalzen 24b an. Hierzu müssen die Biegeplatten 23b und die Hohlwalzen 24b die gleiche Resonanzfrequenz aufweisen. Die Radial-Biegeschwingungs-Resonanzwellenlänge λ_{BR} der sich als stehende Welle ausbildenden Radial-Biegeschwingungen 32 ist von der Biegeplatten-Resonanzwellenlänge λ_{BP} unterschiedlich. Die Biegeplatten-Resonanzwellenlänge λ_{BP} ist abhängig vom Material, der Dicke und dem Durchmesser D_{BP} der Biegeplatten 23b, wohingegen die Biegeschwingungs-Resonanzwellenlänge λ_{BR} vom Material, der Dicke D_{BR} und der Länge L_{BR} der Hohlwalzen 24b abhängig ist. Hinsichtlich der weiteren Funktionsweise des dritten Ausführungsbeispiels wird auf die Ausführungen zum ersten Ausführungsbeispiel verwiesen.

Allgemein erfolgt die Auslegung der Ultraschall-Sonotroden derart, dass zunächst die Dicke D_{BR} der Hohlwalzen derart gewählt wird, dass Radial-Biegeschwingungen mit der gewünschten Amplitude erzeugbar sind und die Hohlwalzen den auftretenden mechanischen Belastungen Stand halten. Anschließend werden die Resonanzfrequenzen der Ultraschall-Erzeugungs-Einrichtungen und der Ultraschall-Sonotroden aufeinander abgestimmt, wobei die Abstimmung durch Veränderungen der geometrischen Abmessungen und des Materials der Ultraschall-Erzeugungs-Einrichtungen und der Ultraschall-Sonotroden durchgeführt wird. Dadurch, dass die Resonanzfrequenzen der Ultraschall-Erzeugungs-Einrichtungen und der Ultraschall-Sonotroden gleich sind, bilden sich bei Betrieb der Ultraschall-Verbindungsvorrichtungen in Längs-Richtung und in Radial-Richtung stehende Wellen aus, deren Wellenlängen von dem geometrischen Aufbau und den Materialeigenschaften der Ultraschall-Erzeugungs-Einrichtungen und der Ultraschall-Sonotroden abhängen. Die Radial-Biegeschwingungen der Hohlwalzen der Ultraschall-Sonotroden weisen im Vergleich zum Stand der Technik höhere Amplituden auf und erlauben ein verbessertes Verbinden von zu verbindenden Materialbahnen.

## Patentansprüche

1. Ultraschall-Verbindungsvorrichtung zum Verbinden von Materialbahnen mit
a. mindestens einer Ultraschall-Erzeugungs-Einrichtung (9) zur Erzeugung von entlang einer Längs-Richtung (16) wirkenden, mechanischen Längs-Schwingungen im Ultraschall-Frequenzbereich,
b. mindestens einer Ultraschall-Sonotrode (5, 7; 5a, 7a; 5b, 7b) zur Umwandlung und Übertragung der Längs-Schwingungen auf zu verbindende Materialbahnen (2, 3), wobei die mindestens eine Ultraschall-Sonotrode (5, 7; 5a, 7a; 5b, 7b)
i. eine konzentrisch zu einer Mittel-Längs-Achse (6, 8) angeordnete, um die Mittel-Längs-Achse (6, 8) drehbar gelagerte Hohlwalze (24; 24a; 24b) aufweist, die derart ausgebildet ist, dass sie zur Ausführung von radial zu der Mittel-Längs-Achse (6, 8) wirkenden Radial-Biegeschwingungen (32) anregbar ist, und
ii. mindestens ein mit der Ultraschall-Erzeugungs-Einrichtung (9) und der Hohlwalze (24; 24a; 24b) verbundenes Anrege-Element (23; 23a; 23b) zur Anregung von Radial-Biegeschwingungen (32) der Hohlwalze (24; 24a; 24b) mittels der Längs-Schwingungen aufweist, und
c. mindestens einem der mindestens einen Ultraschall-Sonotrode (5, 7; 5a, 7a; 5b, 7b) gegenüberliegenden, einen Spalt (11, 12) zur Hindurchführung der zu verbindenden Materialbahnen (2, 3) bildenden Auflage-Bauteil (10).

2. Ultraschall-Verbindungsvorrichtung nach Anspruch 1, **dadurch gekennzeichnet, dass** die Radial-Biegschwingungen (32) als stehende Welle mit einer Biegeschwingungs-Resonanzwellenlänge (λ_{BR}) ausgebildet sind.

3. Ultraschall-Verbindungsvorrichtung nach Anspruch 2, **dadurch gekennzeichnet, dass** die Hohlwalze (24; 24a; 24b) eine Länge (L_{BR}) derart aufweist, dass diese ein ganzzahliges Vielfaches der halben Biegeschwingungs-Resonanzwellenlänge (λ_{BR}) ist.

4. Ultraschall-Verbindungsvorrichtung nach einem der Ansprüche 1 bis 3, **dadurch gekennzeichnet, dass** die mindestens eine Ultraschall-Erzeugungs-Einrichtung (9) und die mindestens eine Ultraschall-Sonotrode (5, 7; 5a, 7a; 5b, 7b) gleiche Resonanzfrequenzen aufweisen.

5. Ultraschall-Verbindungsvorrichtung nach einem der Ansprüche 1 bis 4, **dadurch gekennzeichnet, dass** das mindestens eine Anrege-Element (23; 23a) als zumindest teilweise innerhalb der Hohlwalze (24; 24a) angeordneter Kreuzkoppler (23; 23a) ausgebildet ist.

6. Ultraschall-Verbindungsvorrichtung nach Anspruch 5, **dadurch gekennzeichnet, dass** der Kreuzkoppler (23; 23a) im Bereich eines Schwingungsmaximums (34) der Radial-Biegeschwingungen (32) gegen die Hohlwalze (24; 24a) anliegt.

7. Ultraschall-Verbindungsvorrichtung nach einem der Ansprüche 5 oder 6, **dadurch gekennzeichnet, dass** der Kreuzkoppler (24; 24a) zur Umwandlung der Längs-Schwingungen in Radial-Schwingungen zumindest einen konzentrisch zu der Mittel-Längs-Achse (6, 8) angeordneten Zylinder-Abschnitt (25; 25a) und einen mittig zu dem Zylinder-Abschnitt (25; 25a) angeordneten, gegen die Hohlwalze (24; 24a) anliegenden Steg-Abschnitt (27; 27a) aufweist.

8. Ultraschall-Verbindungsvorrichtung nach einem der Ansprüche 1 bis 4, **dadurch gekennzeichnet, dass** das mindestens eine Anrege-Element (23b) als konzentrisch zu der Mittel-Längs-Achse (6, 8) angeordnete und stirnseitig gegen die Hohlwalze (24b) anliegende Biegeplatte (23b) ausgebildet ist.

9. Ultraschall-Verbindungsvorrichtung nach Anspruch 8, **dadurch gekennzeichnet, dass** die Biegeplatte (23b) derart ausgebildet ist, dass sie zur Ausführung von entlang der Längs-Richtung (16) wirkenden Längs-Biegeschwingungen anregbar ist.

10. Verfahren zum Verbinden von Materialbahnen mittels Ultraschall mit den Schritten:
a. Bereitstellen mindestens einer Ultraschall-Erzeugungs-Einrichtung (9), mindestens einer Ultraschall-Sonotrode (5, 7; 5a, 7a; 5b, 7b) mit einer Hohlwalze (24; 24a; 24b) und mindestens einem Anrege-Element (23; 23a; 23b), und mindestens eines Auflage-Bauteils (10),
b. Erzeugen von entlang einer Längs-Richtung (16) wirkenden, mechanischen Längs-Schwingungen im Ultraschall-Frequenzbereich mittels der mindestens einen Ultraschall-Erzeugungs-Einrichtung (9),
c. Anregen von radial zu einer Mittel-Längs-Achse (6, 8) wirkenden Radial-Biegeschwingungen (32) der Hohlwalze (24; 24a; 24b) mittels des mindestens einen mit der mindestens einen Ultraschall-Erzeugungs-Einrichtung (9) und der Hohlwalze (24; 24a; 24b) verbundenen Anrege-Elements (23; 23a; 23b),
d. Hindurchführen von zu verbindenden Materialbahnen (2, 3) durch einen von der Hohlwalze (24; 24a; 24b) und dem mindestens einen Auflage-Bauteil (10) gebildeten Spalt (11, 12), und
e. Verbinden der durch den Spalt (11, 12) geführten Materialbahnen (2, 3) mittels der Radial-Biegeschwingungen (32) der Hohlwalze (24; 24a; 24b).
